# EUROPEAN PATENT APPLICATION

(11) **EP 2 339 720 A1**
(43) Date of publication of application: **29.06.2011**
(21) Application number: 08876969.0
(22) Date of filing: 17.09.2008
(51) Int. Cl.: H02K 3/51, H02K 1/32, H02K 9/06, H02K 3/24

(54) **ROTOR OF AN ELECTRICAL GENERATOR FOR AEOLIAN APPLICATION WITH COOLING FLOWS IN AT LEAST ONE OF THE COIL HEADS**

(71) Applicant: Indar Electric S.L., 20200 Beasain Guipuzcoa (ES)
(72) Inventor: CALVO MADARIAGA, Xavier, E-20200 BEASAIN (GUIPÚZCOA) (ES); DOMÍNGUEZ GÓMEZ, Adolfo, E-20200 BEASAIN (GUIPÚZCOA) (ES); VAQUERIZO AYASTUY, Jon, E-20200 BEASAIN (GUIPÚZCOA) (ES); OJEDA PICHEL, Javier, E-20200 BEASAIN (GUIPÚZCOA) (ES); BELAUSTEGUI FORONDA, Alejandro, E-20200 BEASAIN (GUIPÚZCOA) (ES); PAGÓLA TOLOSA, Peio, E-20200 BEASAIN (GUIPÚZCOA) (ES)
(74) Representative: Ungria Lopez, Javier
(86) International application number: PCT/ES2008/000594
(87) International publication number: WO 2010/031881

(57) **Abstract**

The invention relates to a rotor comprising an axle (1), a set of stacked magnetic metal plates (3), an alternating current polyphase winding passing through the set of metal plates (3), and a metal band(8, 9) surrounding each coil head. In said rotor, at least in one of the coil heads, the metal band (8, 9) is respectively divided into at least two parts separated by a determined axial distance (12), thereby defining a radial channel enabling a radial flow of cooling air between the respective parts of the metal band (8, 9).

## Description

### FIELD OF THE INVENTION

This invention comes under the technical field of doubly-fed electrical generators, particularly in the generator rotor section for aeolian application.

### BACKGROUND OF THE INVENTION

In an electric generator it is important to maintain windings below a temperature limit set by the insulation type used in the manufacturing thereof, to enable optimum performance regarding electricity generation. Furthermore, it must be taken into account that exceeding said temperature limit means the duration of said material used to ensure insulation between the other phases and earth in the generator, will be much less since the ratio between insulation life and temperature follows a logarithmic law. An increase of 10K in insulation temperature is considered to reduce its life by half. This means small temperature variations, will mean important reductions in the useful life of insulating materials. For this reason, cooling is a very important task when designing an electrical generators, especially a generator rotor with an alternate current polyphase winding, from now on winding, since correct long term generator life depends on this, likewise the useful energy to extract from the same.

Cooling of the electrical generators occurs via convection, conduction and radiation phenomena. Of these three phenomena, convection and conduction are the most important in electrical generator cooling.

Pursuant to the technical state prior to the invention, the most basic electrical generator cooling schema are:
- Single circuit with axial holes: a single cooling circuit is established through the holes made in the rotor and stator magnetic plates. There is no radial air flow. Due to the presence of a single circuit, a cold side (on cool air entry after interchange with cold heat sink) and a hot side (on heated air exit after collecting generator losses) are established inside the generator.
- Single circuit with radial channels; a single cooling circuit is established. In this case air flows radially enabling contact between cooling air and winding. Due to the presence of a circuit, a cold and hot side is established within the generator.
- Double circuit with radial channel: two cooling circuits are established. The air flows are radial, with contact between the winding and the cooling air flow. Due to the presence of the two circuits, temperature differences between the hot and cold sides are minimised.

Cooling of electrical generators with power exceeding 1MW for application, a single or double circuit is generally made using the said cooling radial channel layout. The most effective cooling is to get the air to pass directly over the hot heat sink, i.e. boost convection in generator cooling. The main problem with using the single circuit cooling layout, is that the heat profile obtained in the generator presents a cold (at air entrance) and hot (at air exit) side.

In the design of generators with single air circuit with radial channels, the air enters the generator cooling the coil heads on the cold side (air entrance), and subsequently enters the generator axle. There are two possibilities. The first is with a spideraxle on which stacked plate is placed and the second with stacked plate on a solid axle. Once the air is in the rotor, it is ejected radially by the rotation itself through the channels created to this purpose, passing through the generator rotor first and then the stator. In single circuit radial channel generators, a closing plate is needed at the end of the rotor to force the entire air flow to cross the rotor radially and coil head for the stator, thereby preventing part of the flow from leaving the generator directly without passing through the stator and cooling the same.

Coil heads are subjected to the centrifuge force. To prevent their deformation they have a securing system called a bandage. This bandage consisting of a compressing taping fitted all along the coil heads preventing its deformation by the centrifuge force when rotating.

This bandage is usually made of a material with bad heat conduction. The biggest problem with cooling coil heads is the heat barrier formed by the bandage, which at the same time is essential from the mechanical viewpoint.

In the application for the German patent DE10040232A1 (SIEMENS AG), the creation of cooling radial channels at the ends of the stacked plate set was proposed. Although generator cooling is boosted on increasing the number of radial channels, it does not solve the coil head cooling problem or that of the heat barrier created by the bandage in this area of the generator.

Therefore, having viewed the state of the previous technique for this kind of generator and identified the main problem existent; the desirable aim was to thermally improve the coil head cooling in rotor winding of electrical generators for Aeolian application. Thus, the purpose of this invention is to create a structure enabling rotor coil head cooling to be boosted creating radial air circulation in this area.

### DESCRIPTION OF THE INVENTION

To achieve this aim and solve the aforementioned inconveniences, this invention proposes an electrical generator rotor for Aeolian application with cooling flows over at least one coil head. This comprises: a axle, at least one set of stacked magnetic plates, at least one alternating current polyphase winding, and a bandage over the polyphase winding exterior on each coil head. This characterises said rotor since on the first coil head at least, the bandage is divided into two separate parts minimum by an axially defined distance, thus a radial path is defined which creates a path for the cooling air flow between the respective bandage parts.

For generators with double layer winding, usually a region between the upper and lower layer is commonly defined for the insulating material and called a sandwich. In this case, this invention proposes this region or sandwich be divided into at least 2 separate parts as well to define a pathway for the cooling flow towards the respective bandage parts on at least one of the rotor coils. Optionally a radial path is proposed formed by the parts comprising the bandage and the sandwich parts defined a space of uniform dimensions. This invention enables air circulation over the rotor coil heads establishing a new cooling circuit. Thus,
- division of the bandage into several independent parts enables the radial/axial cooling air path boosting cooling via convection and improving cooling in the winding coil head area.
- As the insulating material placed between the winding upper and lower layer, and called sandwich, is generally divided into several independent parts, it leaves an axial separation enabling cooling air to pass.
- When, as usually occurs in electrical generators for application, the coil head is resting on the support ring joined to the rotor axle, it is equipped with cooling air entrance so it allows the cooling air to pass towards the coil head.

When the rotor rotates, the strand of electrical conduction material, usually, copper, that make up the rotor winding and arranged radially act as a centrifugal fan creating an overpressure of cooling air towards the most external part of the rotor. When there is an air path towards the rotor exterior an air flow is created, which passes between the sandwich and bandage parts, contributing to coil head cooling. Although this air flow is not part of the main air flow cooling the generator, it does mix with the same so the air forming this flow is cold air.

The strands forming part of the winding in the coil heads can be grouped so their fan action boosts the radial air flow.

Usually, in electrical generator rotors for application, the set of stacked magnetic plates is limited on both sides by separate lock washers over which a pressure ring presses them respectively so the plate set is axially fixed. In this case the pressure ring may be fitted with a groove allowing radial air flow. As to the groove design; the number of slots, shape and dimensions will be chosen in each case for cooling optimization. In this case, the parts proximal to the bandage and sandwich must have dimensions which allow radial air flow exit on passing through the slots of the pressure ring on the stacked plates via the space between the lock washers and said proximal parts. This should not only allow a new air path to be opened at the coil head but also thanks to the grooving of the supporting ring, this radial flow is boosted improving cooling even more. This radial flow may boost even more by designing the supporting ring so it acts as a centrifugal fan.

In most Aeolian generators whose cooling is generally a single circuit, the coil heads on the hot side are cooled with air, which has already passed over the rotor and stator, and as such has picked up some of the generator losses and had been heated up. In addition, it is quite common in this kind of generator for the rotor to be closed on its hot side by a closing plate where the coil head overhangs. In this case, for the cooling air to reach the hot side coil head, the rotor closing plate must have some openings enabling part of the main cooling air flow to be derived to the hot side coil head by forming a bypass this way. This air, which goes from the hot side coil head, has Still not cooled the generator, and as such is cold air. The openings can for example be radially distributed circular orifices.

Pursuant to the structure proposed, they are enabled for cooling the flows going radially and axially through the coil head or coil heads.

Next, to facilitate better comprehension of the descriptive report and forming part thereof, a series of figures are attached representing the invention illustratively though not limiting.

### BRIEF DESCRIPTION OF THE FIGURES

**Figures 1A, 1B, 1C**: Are partial schematic sections of different cooling circuit alternatives for an electric generator corresponding to the previous technical state.
**Figure 2****:** Is a partial section schematically showing a rotor made pursuant to this invention.
**Figure 3****:** Is a partial section schematically showing the application of the invention made and shown in figure 2 in the specific case of an electric generator with a single cooling circuit.
**Figure 4****:** Is a front perspective view schematically showing the execution of a pressure ring of the stacked plate set.
**Figure 5****:** Is a view from the back schematically showing the execution of a rotor closing element mounted on the rotor axle, for its use shown in figure 3.
**Figure 6****:** Is a view from the back schematically showing the execution of a rotor closing element mounted on the rotor axle, for its use shown in figure 3.

Numerical references appear in these figures identifying the following elements:
- 1: rotor axle
- 2: rotor rib
- 3: set of magnetic plates
- 4: rotor winding
- 5: winding plate connectors
- 6: pressure ring
- 6a: groove in the pressure ring
- 7: supporting ring
- 7a: axial wing
- 7b: radial extension
- 8: bandage (first part)
- 9: bandage (second part)
- 10: insulating material element (sandwich - first part)
- 11: insulating material element (sandwich - second part)
- 12: axial distance between bandage parts
- 13: rotor closing part
- 13a: axial orifices
- 13b: ring opening
- 14: lock washer
- 15: stator

### DESCRIPTION OF AN EMBODIMENT OF THE INVENTION

Below is a description of the invention based on the previously commented figures.

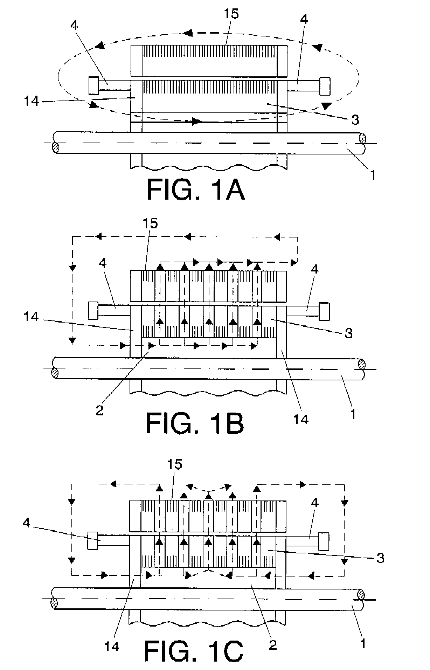

Figures 1A, 1B and 1C show the cooling air flows as per the alternatives already known from the technical state of an electric generator with conventional rotor.

Figure 1A shows a single cooling circuit established via the holes made in the magnetic plates (3) mounted on the axle (1) of the rotor and through the stator (15). There is no radial air flow. Due to the presence of a single circuit, a cold side is established in the generators, i.e, on the left corresponding to cool air entry after interchange with a cold spot, and a hot side, i.e. on the right, corresponding to the hot air exit after collecting generator losses.

Figure 1B shows a single cooling circuit, where the air flow also circulates radially enabling contact between the cooling air and winding (4). The magnetic plate sets (3) on being mounted on axial ribs (2) of axle (3), the cooling air flows axially guided by these axial ribs (2). As in the case of the single circuit shown in figure 1A, a hot and cold side is established inside the generator.

Figure 1C shows a double cooling circuit with radial channels. As shown in said figure, the two cooling circuits generate respective air flows radially. Thus there is contact between winding (4) and the cooling air flow, thus due to the presence of the two circuits, as an advantage the temperature differences between the hot and cold side are minimised.

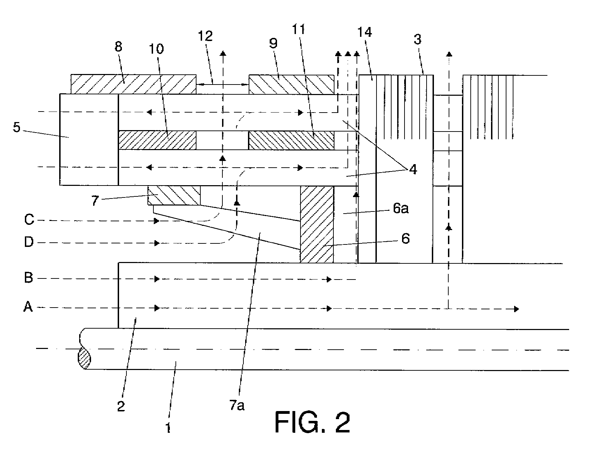

As can be seen in the execution of this invention shown in figure 2, the rotor has an axle (1) with ribs (2) on its periphery, and the set of magnetic plates (3) are placed on separate lock washers (14), pressed against the set of magnetic plates (3) by a pressure ring (6), which will be described in more detail below. The double layer winding (4) is inserted along the slots of the set of magnetic plates (3), shaped conventionally by strand in conductor material (copper). The electrical connections of the different winding plates are done via connectors (5) located on the end of the coil head. The bandage (8, 9) is placed on the outside of the rotor coil head. As can be seen, the bandage is made up of two separate parts (8 and 9), a first or proximal part (9) opposite the pressure washer (14) and a second or distant part (8) on the top free end of the coil head (4) separated by an axial distance (4) from the coil head rotor is said sandwich (10, 11). Contrary to conventional rotors where the sandwich (10, 11) is generally continuous along the coil heads, according to this invention, the sandwich (10, 11) is divided into two parts, leaving an axial separation enabling the cool air to pass through. The sandwich also comprises a first or proximal part (11) opposite the pressure washer (14) and a second or distant part (10) at the free end of the winding (4). The respective positions of the proximal parts (9, 11) of the sandwich and bandage are such, that between the same and the pressure washer (14) a proximal radial path is defined, through which the Cooling air can flow.

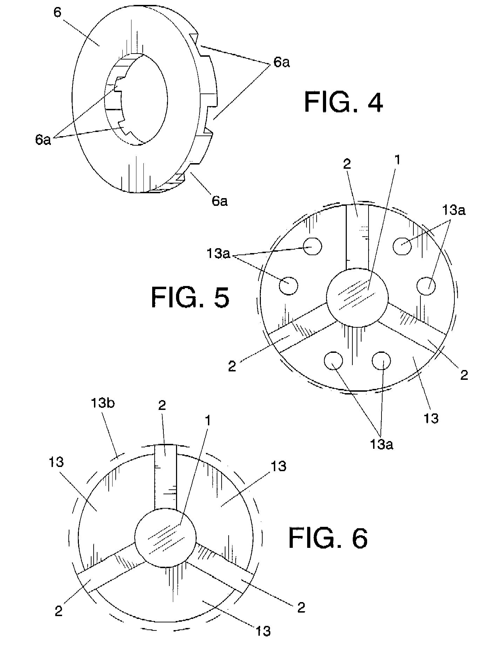

It can also be shown that the supporting ring (7) of the coil heads is made so that air can pass through. In the execution shown in figure 2, the supporting ring (7) is joined to the pressure ring (6) of the set of stacked plates (3) via axial wings (7a) between which cooling air can flow. To enable air flow towards the radial path between the lock washer (14) and the proximal parts (9, 11) of the bandage and sandwich, the pressure ring (6) must include air paths, for example, those defined by grooving (6a) as can be seen in figure 4.

obviously the number of separate parts for the bandage (8, 9) and the sandwich (10, 11) can be respectively greater than two.

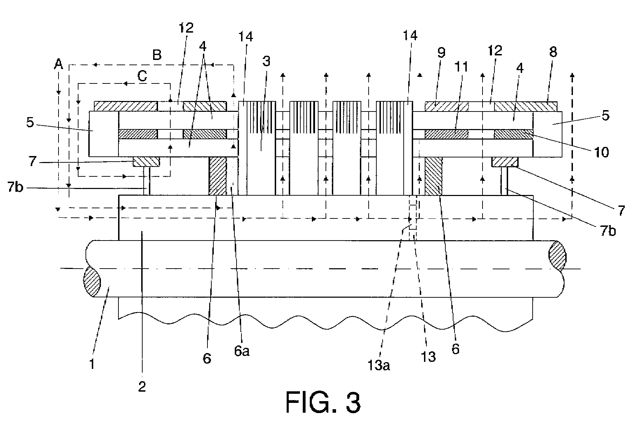

Figure 3 shows the application of the rotor shown in figure 2 to a generator with a single cooling circuit. In this care, the rotor has an opening made in the cloture. One can see that the winding head (4) on the hot side of the rotor presents the same elements as the cold side, but arranged symmetrically as a speculate image. To enable cooling of the hot side coil head there is a closing plate (13) with openings through which the cooling air can flow to the hot side winding coil head (4). Figures 5 and 6 show particular ways of how the holes can be made in the rotor closing plate (13). Thus, for example in the execution illustrated in figure 5, the openings 13a are axial orifices distributed radially between the rotor axle (1) ribs (2) ; whereas in figure 6 the openings (13b) are in ring direction between said ribs (2).

It should be mentioned the rotor shown in figure 3 differs slightly from that of figure 2, since its supporting rings (7), instead of being joined to the pressure ring (6) are directly joined to the rotor axle (1) ribs (2) via radial extensions (7b) between which, an axial cooling air flow can pass for obvious reasons.

Single cooling circuits (A, B, C, D) are also depicted in figures 2 and 3, thus the cooling air flows in the respective executions are shown there. Figure 2 shows only the circuits on the rotor cold side, while figure 3 shows the application of the execution of figure 2 referred to a single circulation system, i.e. a circulation system similar to that shown in figure 1B. However, it is obvious the execution of figure 2 could also be applied to an analogous circulation system to that shown in figure 1C, to have a double circuit this way, where the air flows along two different paths, creating two air circuits in the generator, so there are two different entries to the rotor, corresponding to a symmetrical configuration without heat differences between the two sides of the generator.

Returning specifically to that shown in figures 2 and 3, one can see that circuit A (figure 2) is the main cooling circuit of the generator. This circuit is the one which passes through the rotor, via the generator stator and cooler (not shown).

In the configuration of the single circuit, the air only flows along one path in the generator rotor. Therefore, there is asymmetry in the resulting cooling because one side is hotter than the other. Even so, it is important to emphasise that a better cooling of the winding coil heads (4) is produced, since as will be explained further on, the cooling air on both sides passes between the respects bandage (8, 9) and sandwich (10, 11) parts; likewise through the path between the lock washer and the respective proximal parts (9, 11) of the bandage and sandwich. Circuit B (figure 2) passes between the lock washer (14) and the pressure ring (6) of the set of stacked plates. This air is driven by the rotor winding strands (14) and the pressure ring itself (6), which should it have grooving (6a) as shown in figure 4, it acts as a fan boosting air circulation in this circuit.

Circuit C (figure 2) is radially established through the rotor coil (4) due to the participation of the bandage (8, 9) and sandwich (10, 11); and actively participates in cooling the area.

Circuit D (figure 2) is established through the rotor coil (4) due to the participation of the bandage (8, 9) and sandwich (10, 11); and the presence of a space so this air can circulate axially through the rotor winding strands.

## Claims

1. **ROTOR OF AN ELECTRICAL GENERATOR FOR AEOLIAN APPLICATION WITH COOLING FLOWS IN AT LEAST ONE OF THE COIL HEADS**, comprising a axle (1), at least one set of stacked magnetic plates (3), at least an alternating current polyphase winding (4), at least a bandage (8, 9) that surrounds the outside of the polyphase winding (4) in each coil head, **characterised in that** at least on one coil head, the bandage (8, 9) is divided into at least two independent parts separated by a determined axial distance (12), thus defining one radial path enabling a cooling air flow between the respective parts of the bandage (8, 9).

2. **ROTOR OF AN ELECTRICAL GENERATOR FOR AEOLIAN APPLICATION WITH COOLING FLOWS IN AT LEAST ONE OF THE COIL HEADS**, according to claim 1, **characterised in that** at least the second coil head comprises a rotor closing part (13) that prevents the air leaving from the rotor without passing through radial channels of the rotor and **in that** said rotor closing part (13) is provided with at least one opening (13a, 13b) for a refrigeration air flow path.

3. **ROTOR OF AN ELECTRICAL GENERATOR FOR AEOLIAN APPLICATION WITH COOLING FLOWS IN AT LEAST ONE OF THE COIL HEADS**, according to claim 2, **characterised in that** the openings (13b) are in rotor closing part (13), placed in annular alignment between the rotor ribs (2) of the rotor axle (1) and radially separated from the rotor axle.

4. **ROTOR OF AN ELECTRICAL GENERATOR FOR AEOLIAN APPLICATION WITH COOLING FLOWS IN AT LEAST ONE OF THE COIL HEADS**, according to claim 1 or 2, **characterised in that** the rotor winding (4) comprises sets of grouped strands in order to maximize the path (A, B, C, D) of the refrigeration air flow that radially passes through the rotor and stator.
